# EUROPÄISCHE PATENTSCHRIFT

(11) **EP 0 870 447 B1**
(45) Veröffentlichungstag und Bekanntmachung des Hinweises auf die Patenterteilung: **18.09.2002**
(21) Anmeldenummer: 98101671.0
(22) Anmeldetag: 31.01.1998
(51) Int. Cl.: A47C 27/14

(54) **Polsterkörper aus Schaumstoff**
Upholstery made of foam material
Elément de rembourrage en matériau mousse

(30) Priorität: 10.04.1997 DE 19714804
(43) Veröffentlichungstag der Anmeldung: 14.10.1998
(73) Patentinhaber: Lück GmbH & Co. KG, 46395 Bocholt (DE)
(72) Erfinder: Busskamp, Thomas, 46499 Hamminkeln (DE)
(74) Vertreter: Habbel, Hans-Georg, Dipl.-Ing.

(56) Entgegenhaltungen:
- WO-A-94/15504
- DE-A- 3 608 342
- FR-A- 2 682 292
- US-A- 5 749 111
- US-A- 5 960 497

## Beschreibung

Die Erfindung bezieht sich auf einen Polsterkörper aus Schaumstoff gemäß dem Oberbegriff des Hauptanspruches.

Ein gattungsbildender Polsterkörper wird in der DE-A-20 19 488 beschrieben. Die Einsatzgebiete derartiger Polsterkörper liegen schwerpunktmäßig im Bettwarenbereich, in der Polstermöbel- und Matratzenindustrie, in der Konfektion und im Spielzeugbereich, beispielsweise bei Spieltieren.

Aus der FR-A-12 63 758 ist es dabei bekanntgeworden, plattenförmige Schaumstoffkörper nach Einbringen einer Schar von Durchstechungen quer zu deren flächigen Ausdehnung auseinanderzuziehen. Man erhält auf diese Weise wabenförmige Strukturen, die in dieser auseinandergezogenen Lage beispielsweise durch beidseitiges Aufbringen von Abdeckplatten fixiert werden können. Hierdurch wird eine gewisse Volumenausdehnung und eine gewisse Weichheit des Polsterkörpers erreicht. Durch die Kombination einer Vielzahl solcher auseinandergereckter Schaumstoffkörper wurde versucht, die entsprechend angestrebte Weichheit und Abstützfähigkeit des Polsterkörpers zu erreichen. Die Ergebnisse werden aber als unbefriedigend erachtet.

Es ist auch bereits in der WO 94/15504 vorgeschlagen worden, ein Polsterelement dadurch herzustellen, daß auf einem Basisteil ein Federungsteil angeordnet wird, wobei sich das Basisteil über die ganze Länge und Breite des Polsterelementes erstreckt und das Federungsteil aus einzelnen Federkörpern aus materialelastischem Werkstoff, wie Schaumstoff, gebildet wird. Die einzelnen Federkörper sind dabei als im wesentlichen zylindrische Vollkörper ausgebildet und sind unabhängig voneinander so angeordnet, daß sie sich auch beim Einfedern nicht gegenseitig beeinflussen können. Dadurch, daß diese Federkörper in vertikaler Richtung mehrschichtig aus Schichten unterschiedlicher Elastizität aufgebaut wurden, wurde angestrebt, einen progressiven Aufbau des Federungsteiles zu erreichen. Der Aufwand zur Herstellung derartiger Polsterkörper ist aber erheblich und beschränkt dadurch den Einsatzbereich. Außerdem hat dieser bekannte Polsterkörper den Nachteil, daß die Seitensteifigkeit und Schubfestigkeit gering ist und durch zusätzliche Mittel herbeigeführt werden muß.

Aus der gattungsbildenden CH-PS 322 192 ist ein Polsterkörper aus zelligem Werkstoff und Verfahren zu seiner Herstellung bekannt, wobei ein wesentliches Merkmal dieser Anordnung darin zu sehen ist, daß die gesamte Oberfläche des Schaumstoffkörpers durch die Einschnitte aufgeschnitten ist, d. h. also, sich die durch die Einschnitte gebildeten Stützen nicht an verbleibendem Werkstoff des Schaumstoffkörpers abstützen können, sondern bei einer seitlichen Bewegung der Stützen kommen die Stützen miteinander in Kontakt. Hierdurch wird keine Seitenfestigkeit des Polsterkörpers erreicht, sondern der Polsterkörper ist "schwammig" an seiner Oberfläche und vermittelt dadurch nicht den gewünschten Stützeffekt.

Der Erfindung liegt die Aufgabe zugrunde, einen Polsterkörper zu schaffen, der kostengünstig hergestellt werden kann, einen progressiven Polsterungseffekt ermöglicht, eine gewünschte Seitensteifigkeit und Schubfestigkeit aufweist und an die unterschiedlichsten Einsatzfälle leicht anpaßbar ist.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird ein Polsterkörper vorgeschlagen, der beispielsweise aus einem Schaumstoffblock besteht, dessen Oberflächenspannung in an sich bekannter Weise durch im Abstand voneinander angeordnete Einschnitte aufgehoben ist. Diese Einschnitte durchqueren den Polsterkörper nicht von der einen Seite bis zur anderen Seite, sondern die Tiefe der Einschnitte ist derart gewählt, daß sie den Schaumstoffblock nur teilweise durchqueren. Weiterhin sind die Einschnitte im Querschnitt ringförmig oder polygonal ausgebildet, schaffen also in dem Block aus Schaumstoff einzelne zylinderförmige Stützen, die vom Rest des Blockmaterials getrennt sind, also unabhängig von ihrer Umgebung einfedern können, unabhängig davon, ob diese Einschnitte nun ringförmig oder polygonal ausgebildet sind, d.h. die durch die Einschnitte gebildeten Stützen sind aber so weit voneinander entfernt, daß zwischen den einzelnen Stützen noch Material des Schaumstoffblockes, aus dem die Stützen ausgeschnitten sind, verbleibt, d.h. also, die Oberfläche des Schaumstoffblockes steht durch diese nicht eingeschnittenen Bereiche vorzugsweise über die gesamte Oberfläche miteinander in Kontakt. Hierdurch wird die angestrebte Seitensteifigkeit und Schubfestigkeit erreicht, wobei trotz dieser Steifigkeit und Festigkeit der erforderliche Polsterungseffekt erzielt wird.

Zusätzlich können diese Einschnitte aus mehreren konzentrisch zueinander angeordneten Einschnitten gebildet werden und die Tiefe der Einschnitte kann über die Breite und Länge des Blockes gesehen unterschiedlich gewählt werden, wobei auch die Tiefe bei konzentrisch zueinander angeordneten Einschnitten unterschiedlich sein kann, d. h. also, beispielsweise der äußere Einschnitt kann tiefer in den Block eingreifen als der innere Einschnitt oder umgekehrt und schließlich ist es gemäß der Erfindung möglich, bei konzentrisch zueinander angeordneten Einschnitten das Material des innersten Einschnittes zu entfernen, so daß hier eine unwahrscheinlich große Palette von Variationsmöglichkeiten geschaffen wird, um die Widerstandskraft über den ganzen Schaumstoffblock gesehen zu variieren.

Hierbei ist es natürlich möglich, wie im Stand der Technik bekannt, den Schaumstoffblock und damit auch die durch die Einschnitte erzielten Federungskörper aus einem Werkstoff höchster Dichte mit höchstmöglicher Weichheit herzustellen, wobei Raumgewichte von mehr als 50 kg/m³ bei Stauchhärten von weniger als 5,0 kPa als Richtschnur dienen können.

Der Rand des Polsterkörpers kann und sollte einschnittfrei sein, so daß die erforderliche Randstabilität des Polsterkörpers erreicht wird, wobei aber dadurch, daß im Prinzip kein Material aus dem Schaumstoffkörper entfernt wird, die Schubfestigkeit und die Seitensteifigkeit des hinsichtlich seiner Widerstandsfähigkeit beeinflussenden Teiles hochgehalten werden kann.

Durch den erfindungsgemäßen Vorschlag wird bei materialeinheitlichem Aufbau des Polsterkörpers ein hoher progressiver Aufbau ermöglicht, so daß die Herstellungskosten gering und der erzielte Polsterungseffekt groß ist.

Ausführungsbeispiele der Erfindung werden nachfolgend anhand der Zeichnungen erläutert.

Die Zeichnungen zeigen dabei in
- Fig. 1: einen Polsterkörper gemäß der Erfindung mit einfachen ringförmigen Einschnitten, in
- Fig. 2: einen Polsterkörper mit konzentrisch zueinander angeordneten Ringschnitten, in
- Fig. 3: einen Polsterkörper gemäß Fig. 1 bzw. 2 mit im Querschnitt polygonal ausgebildeten Einschnitten und in
- Fig. 4: einen Schnitt durch einen Polsterkörper zur Verdeutlichung der Tatsache, daß die einzelnen Einschnitte unterschiedliche Tiefe aufweisen können und dadurch über die Länge und Breite des Polsterkörpers unterschiedliche Polsterungseffekte ergeben.

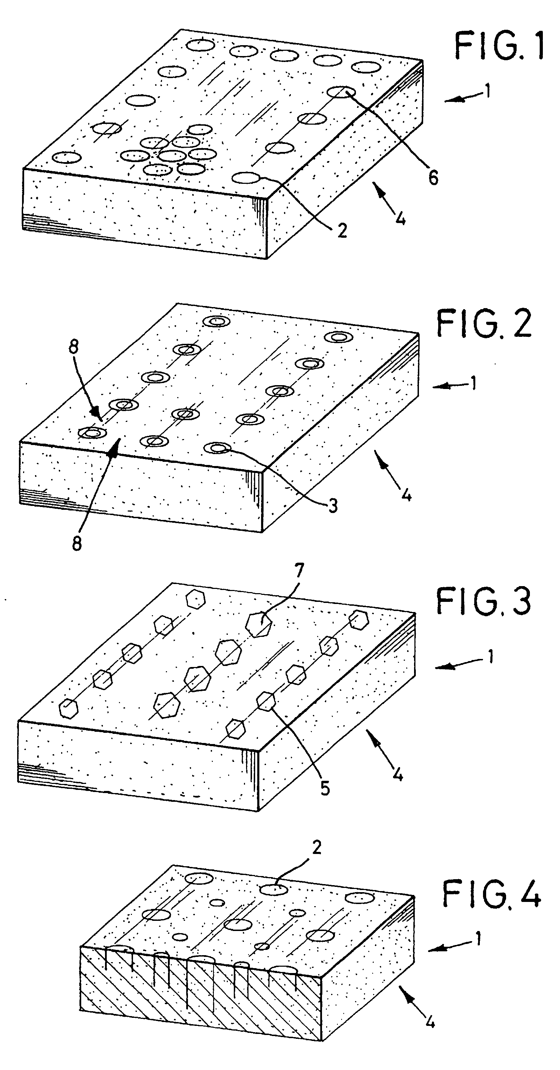

In Fig. 1 ist mit 1 ein Polsterkörper bezeichnet, der durch einen Schaumstoffblock 4 gebildet wird. In diesem Polsterkörper 1 sind im Querschnitt ringförmige Einschnitte 2 ausgebildet, durch die zylinderförmige Stützen 6 gebildet werden, wobei die Herstellung keineswegs auf "Einschneiden" begrenzt ist, sondern diese Einschnitte können auch durch Stanzen oder sonstige in der Schaumstoffindustrie übliche Maßnahmen hergestellt werden.

Wesentlich ist aber, wie dies auch deutlich die Figuren zeigen, daß zwischen den durch die Einschnitte gebildeten Stützen 6 Material 8 des Schaumstoffblockes erhalten bleibt und nicht wie im Stand der Technik die Stützen voneinander nur durch die Einschnitte getrennt sind. Dadurch, daß das Material des Schaumstoffblockes zwischen den gebildeten Stützen erhalten bleibt, wird die gewünschte Schubfestigkeit und Seitensteifigkeit gewährleistet.

Fig. 2 soll verdeutlichen, daß die Einschnitte auch als konzentrische Ringeinschnitte 3 gebildet sein können, wobei nicht nur zwei konzentrische Einschnitte vorgesehen werden können, sondern selbstverständlich auch mehrere.

Fig. 3 verdeutlicht, daß anstelle der bisher erläuterten kreisringförmigen Einschnitte auch polygonale Einschnitte 5 eingesetzt werden können, wobei in diesem Fall insbesondere die Herstellung durch Stanzen od. dgl. erfolgen kann und somit zylinderförmige Stützen 7 mit polygonalem Querschnitt gebildet werden.

Fig. 4 zeigt schließlich, daß beispielsweise bei der Herstellung eines Polstersitzes nunmehr die Möglichkeit besteht, in den Bereichen, in denen der Sitz besonders weich gepolstert sein soll, die Tiefe der Einschnitte 2 zu vergrößern und in dem Bereich, wo beispielsweise eine hohe Seitensteifigkeit erreicht werden soll, die Tiefe der Einschnitte 2 zu verringern. Die gleichen Überlegungen gelten natürlich nicht nur für Polstersitze, sondern auch für Matratzen od. dgl.

Die Steuerung der Federungseigenschaften der Einschnitte kann weiterhin dadurch erfolgen, daß in ein und demselben Element einfache, ringförmige oder polygonale Einschnitte mit konzentrisch zueinander angeordneten ringförmigen oder polygonalen Einschnitten kombiniert werden und weiterhin eine Kombination hinsichtlich der Tiefe derartiger Einschnitte herbeigeführt wird. Auch ist es möglich, bei durch konzentrische Einschnitte 3 gebildeten Stützen 6, 7 die innerste Stütze zu entfernen, wodurch wiederum das Federungsverhalten beeinflußt werden kann.

## Patentansprüche

1. Polsterkörper (1) aus Schaumstoff mit wenigstens einem Schaumstoffblock (4), der an seiner Oberseite mit im Abstand voneinander angeordneten, die Oberflächenspannung des Schaumstoffes aufhebenden Einschnitten (2, 3, 5) ausgerüstet ist, derenTiefe derart ist, daß sie den Schaumstoffblock (4) nur teilweise durchqueren, wobei die Einschnitte (2, 3, 5) in dem Schaumstoffblock (4) einzelne, voneinander beabstandete, zylinderförmige Stützen ausbilden, **dadurch gekennzeichnet, daß** zwischen den durch die Einschnitte (2, 3, 5) gebildeten Stützen (6, 7) das Material (8) des Schaumstoffblockes (4) erhalten bleibt.

2. Polsterkörper nach Anspruch 1, **dadurch gekennzeichnet, daß** das Material (8) des Schaumstoffblockes (4) allseits um die Stützen (6, 7) vorhanden ist.

3. Polsterkörper nach Anspruch 1 oder 2, **dadurch gekennzeichnet, daß** die Einschnitte (2) und damit die Stützen (6) im Querschnitt ringförmig ausgebildet sind.

4. Polsterkörper nach Anspruch 1 oder 2, **dadurch gekennzeichnet, daß** die Einschnitte (5) und damit die Stütze (7) polygonalen Querschnitt aufweisen.

5. Polsterkörper nach einem der vorhergehenden Ansprüche, **dadurch gekennzeichnet, daß** die Einschnitte (2, 5) konzentrisch ineinander angeordnet sind.

6. Polsterkörper nach einem der vorhergehenden Ansprüche, **dadurch gekennzeichnet, daß** einfache ringförmige Einschnitte (2) und konzentrische ringförmige Einschnitte (3) sowie Einschnitte (5) mit polygonalem Querschnitt miteinander kombiniert sind

7. Polsterkörper nach einem der vorhergehenden Ansprüche, **dadurch gekennzeichnet, daß** die Tiefe der Einschnitte (2, 3 bzw. 5) bei einem Polsterkörper variabel ist.

8. Polsterkörper nach einem der vorhergehenden Ansprüche, **dadurch gekennzeichnet, daß** bei Anwendung von konzentrischen Ringschnitten (3) oder konzentrischen, polygonalen Querschnitt aufweisenden Einschnitten (5) der Werkstoff des innersten Körpers entfernt ist.

9. Polsterkörper nach einem der vorhergehenden Ansprüche, **dadurch gekennzeichnet, daß** der Randbereich des Polsterkörpers (1) frei von Einschnitten ist.

## Claims

1. An upholstered body (1) of foam material with at least one foam material block (4) provided on its upper side with spaced-apart incisions (2, 3, 5) which cancel the surface tension of the foam material and the depth of which is such that they pass only partially through the foam material block (4), the incisions (2, 3, 5) in the foam material block (4) forming separate, cylindrical pillars spaced apart from each other, **characterised in that** the material (8) of the foam material block (4) is retained between the pillars (6, 7) formed by the incisions (2, 3, 5).

2. An upholstered body according to Claim 1, **characterised in that** the material (8) of the foam material block (4) is present around the pillars (6, 7) on all sides.

3. An upholstered body according to Claim 1 or 2, **characterised in that** the incisions (2) and therefore the pillars (6) have an annular configuration in cross-section.

4. An upholstered body according to Claim 1 or 2, **characterised in that** the incisions (5) and therefore the pillars (7) have a polygonal cross-section.

5. An upholstered body according to one of the preceding claims, **characterised in that** the incisions (2, 5) are arranged concentrically inside one another.

6. An upholstered body according to one of the preceding claims, **characterised in that** simple annular incisions (2), concentric annular incisions (3) and incisions (5) with a polygonal cross-section are combined with each other.

7. An upholstered body according to one of the preceding claims, **characterised in that** the depth of the incisions (2, 3, 5) is variable within one upholstered body.

8. An upholstered body according to one of the preceding claims, **characterised in that** when concentric annular incisions (3) or concentric incisions (5) having a polygonal cross-section are used, the material of the innermost body is removed

9. An upholstered body according to one of the preceding claims, **characterised in that** the edge portion of the upholstered body (1) is free of incisions.

## Revendications

1. Élément de rembourrage (1) en matériau mousse comprenant au moins un bloc de mousse (4) pourvu sur sa face supérieure de découpes (2, 3, 5) espacées les unes des autres et supprimant la tension superficielle du matériau mousse, dont la profondeur est telle qu'elles ne traversent que partiellement le bloc de mousse (4), lesquelles découpes (2, 3, 5) dans le bloc de mousse (4) forment des piliers cylindriques distincts et distants les uns des autres, **caractérisé en ce que** le matériau (8) du bloc de mousse (4) est préservé entre les piliers (6, 7) formés par les découpes (2, 3, 5).

2. Élément de rembourrage selon la revendication 1, **caractérisé en ce que** le matériau (8) du bloc de mousse (4) entoure les piliers (6, 7) de tous côtés.

3. Élément de rembourrage selon la revendication 1 ou 2, **caractérisé en ce que** les découpes (2) et de ce fait les piliers (6) sont de section annulaire.

4. Élément de rembourrage selon la revendication 1 ou 2, **caractérisé en ce que** les découpes (5) et de ce fait les piliers (7) sont de section polygonale.

5. Élément de rembourrage selon l'une ou l'ensemble des revendications précédentes, **caractérisé en ce que** les découpes (2, 5) sont ménagées de façon concentrique les unes à l'intérieur des autres.

6. Élément de rembourrage selon l'une ou l'ensemble des revendications précédentes, **caractérisé en ce que** des découpes annulaires simples (2) et des découpes annulaires concentriques (3) ainsi que des découpes (5) de section polygonale sont combinées entre elles.

7. Élément de rembourrage selon l'une ou l'ensemble des revendications précédentes, **caractérisé en ce que** la profondeur des découpes (2, 3, 5) dans un élément de rembourrage est variable.

8. Élément de rembourrage selon l'une ou l'ensemble des revendications précédentes, **caractérisé en ce que** lorsque des découpes annulaires concentriques (3) ou des découpes concentriques de section polygonale (5) sont utilisées, le matériau intérieur de l'élément est enlevé.

9. Élément de rembourrage selon l'une ou l'ensemble des revendications précédentes, **caractérisé en ce que** le bord de l'élément de rembourrage (1) ne comporte pas de découpes.
